# EUROPEAN PATENT APPLICATION

(11) **EP 3 674 992 A1**
(43) Date of publication of application: **01.07.2020**
(21) Application number: 19214752.8
(22) Date of filing: 10.12.2019
(51) Int. Cl.: G06N 3/08, G06N 3/04

(54) **SYSTEMS AND METHODS FOR TRAINING A NEURAL NETWORK**

(30) Priority: 24.12.2018 US 201816231750
(71) Applicant: Nokia Solutions and Networks Oy, 02610 Espoo (FI)
(72) Inventor: KUSHNIR, Dan, Springfield, New Jersey 07081 (US); Nguyen, Tam, Corvallis, Oregon 97330 (US)
(74) Representative: Nokia EPO representatives

(57) **Abstract**

The present disclosure describes systems and methods for training a neural network. A representative embodiment includes selecting one or more candidate data points to label from a pool set of unlabeled data points where the candidate data point is selected such that the selective addition of the candidate data point and its correct label to a training set of correctly labeled data points used to train the neural network most reduces the label entropy of a test set of unlabeled data points used to test the neural network. The active learning neural network is further (e.g., iteratively) trained using the augmented set of correctly labeled training data points.

## Description

### TECHNICAL FIELD

The present disclosure is directed towards automated systems and methods for training Artificial Intelligence networks such as Neural Networks.

### BACKGROUND

This section introduces aspects that may be helpful in facilitating a better understanding of the systems and methods disclosed herein. Accordingly, the statements of this section are to be read in this light and are not to be understood or interpreted as admissions about what is or is not in the prior art.

Artificial Intelligence learning systems, such as, for example, Deep Neural Networks have become increasingly important in executing tasks such as image classification and object recognition, as well as in other learning tasks. However, training a Neural Network remains a computationally onerous task and typically requires a large amount of labeled data and many algorithmic iterations until it convergences to a desired level of accuracy. Labeling data for use in training a Neural Network is an expensive operation, and, moreover, training the Neural Network with labeled data selected using conventional approaches (e.g., randomly) may not improve the performance of the Neural Network meaningfully in any given iteration. Automated techniques for improving the training of Neural Networks are needed.

### BRIEF SUMMARY

In various aspects, systems, methods and apparatus for training a neural network are provided. In one representative embodiment, a system for training a neural network includes a trainer unit, a tester unit, an annotation unit, and a query unit.

The trainer unit is configured to iteratively train an active learning neural network unit using a set of correctly labeled training data points.

The tester unit is configured to use the trained neural network unit to assign labels to a test set of unlabeled data points.

The annotation unit is configured to receive a selected candidate unlabeled data point as input and provide its correct label as output within a predetermined margin of error.

The query unit is configured to receive as input a pool set of unlabeled data points, the set of correctly labeled training data points, and the test set of unlabeled data points and, iteratively select a candidate data point to label using the annotation unit from the pool set of unlabeled data points.

The query unit selects the candidate data point to label by computing label entropy values for each of the pool set of unlabeled points and selecting a subset of potential data points from the pool set that have the highest entropy values. The candidate data point is selected from the potential data points as the data point whose addition to the labeled training set most reduces the label entropy of the test set compared to the label entropy of the test set without addition of the data into the training set. The selected candidate data point is provided as input to the annotation unit, and its correct label is received from the annotation unit. The set of training points is augmented with the selected candidate data point and its correct label, and the augmented training data set is used to further or iteratively train the neural network unit.

In one embodiment, the neural network unit is a deep neural network unit having at least one hidden layer.

In one embodiment, the set of correctly labelled training data points comprises a set of correctly labeled training image data and the test set and pool set of unlabeled data points respectively comprise a set of unlabeled image data and, the neural network unit is configured to output predicted labels for image data received as input to the neural network unit.

In another representative embodiment, a method of training a neural network is presented. The method includes receiving as input a pool set of unlabeled data points, a training set of correctly labeled training data points, and a test set of unlabeled data points. The method further includes iteratively training an active learning neural network unit using the set of correctly labeled training data points. The method further includes iteratively selecting a candidate data point to label using an annotation unit from the pool set of unlabeled data points. The candidate data point to label is selected by computing label entropy values for each of the pool set of unlabeled points and selecting a subset of potential data points from the pool set that have the highest entropy values, and selecting the candidate data point from the potential data points as the data point whose addition to the training set most reduces the label entropy of the test set compared to the label entropy of the test set without addition of the data into the training set. The method further includes providing as input the selected candidate data point as input to an annotation unit, receiving its correct label from the annotation unit, augmenting the training set of correctly labeled training data points with the selected candidate data point and its correct label, and, retraining the active learning neural network unit using the augmented set of correctly labeled training data points.

These and other embodiments will become apparent in light of the following detailed description herein, with reference to the accompanying drawings.

### BRIEF DESCRIPTION OF THE DRAWINGS

FIG. 1 illustrates an example of a system in accordance with an aspect of the disclosure.
FIG. 2 illustrates an example of a process in accordance with an aspect of the disclosure.
FIG. 3 illustrates an example of an apparatus for implementing various aspects of the disclosure.
FIG. 4 illustrates performance improvement in comparison with random selection of training data using benchmark MNIST data.

### DETAILED DESCRIPTION

Various aspects of the disclosure are described below with reference to the accompanying drawings, in which like numbers refer to like elements throughout the description of the figures. The description and drawings merely illustrate the principles of the disclosure. It will be appreciated that those skilled in the art will be able to devise various arrangements that, although not explicitly described or shown herein, embody the principles and are included within spirit and scope of the disclosure.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

Semi-supervised learning includes a training phase in which a training set of labeled data pairs (Xi,Yi), where Xi is a training data point and Yi is a training label, are provided to a learning model such as a Neural Network which learns to predict labels Yj of any presented test data samples Xj. The accuracy of the learning model after it is trained can be measured over a set of unlabeled data points, typically known as a test set. Typically, the test set is much larger than the training set. A test prediction that is not equal to the true label of the datum is considered as an error.

In Deep Learning models such as Deep Neural Networks, the required size of training data set to learn an accurate model is typically very large. Because of that, the training time is also long. Thus, deep Learning models are often not appropriate or used for asks in which training needs to be fast.

This training problem also prevails in many other settings in which labeling data is a costly operation and\or training needs to be reduced. One such setting is video surveillance/annotation and image tagging in which a human has to observe a video or an image and categorize it. Another example setting is medical diagnostics in which patients need to submit to a number of costly diagnostic tests to determine their state (label). In all of these cases labeling is an expensive operation and, as mentioned above, despite the size of the training data, there are often many training data points that do not meaningfully improve the performance of the trained network. Thus, Deep Learning models are often not appropriate or used for tasks where labeling data is expensive or budget restricted and therefore labeled points available for training are limited. Thus, it is important to find and use a training set that maximizes the accuracy of the model while keeping overall size of the training data within acceptable budgetary limits.

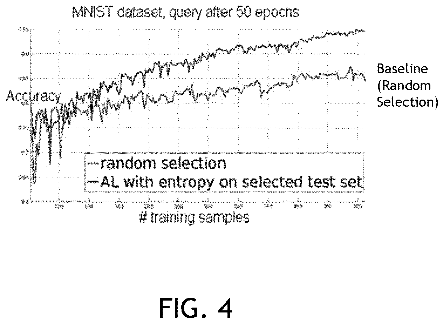

The present disclosure describes a system and method for training a Neural Network that addresses the problems above. In particular, systems and methods are disclosed herein in which an initial set of correctly labeled training data points are augmented with additional correctly labeled data points that are dynamically selected as described further below. Due to the particular way in which the additional data points are selected and added to the training data, the systems and method described herein enable a trained Neural Network model that performs better (i.e., performs with an increased accuracy and lower error) than a comparable model that is trained with a randomly selected set of training samples as in many conventional approaches, as demonstrated with an example in Fig. 4.

Accordingly, systems and methods are described below to augment a training data set used to train the Neural Network with a set of dynamically selected unlabeled data samples and their respective correct labels such that the addition of the dynamically selected unlabeled data samples and their true labels to the training data set greatly improves the labeling prediction of the Neural Network.

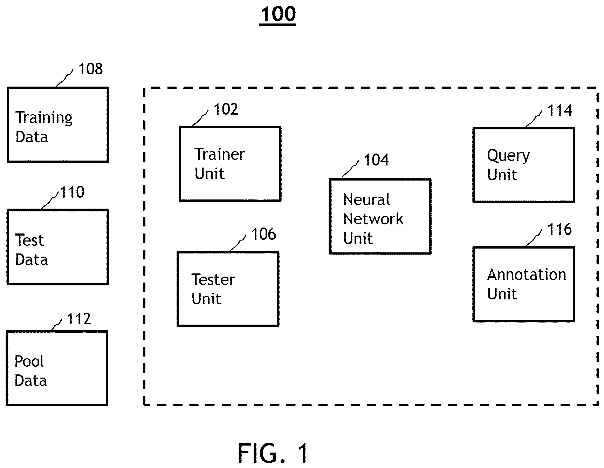

FIG. 1 illustrates a system 100 in accordance with various aspects of the disclosure. System 100 includes a trainer unit 102, a Neural Network unit 104, and a tester unit 106. The trainer unit 102 trains the Neural Network unit 104 using a set of correctly labeled training data 108. The tester unit 106 tests the label prediction of the Neural Network unit 104 using a set of unlabeled test data 110. Each of the units depicted in FIG. 1 may comprise a system, circuitry, hardware (processor or processors, physical memory) etc., configured to implement its respective functionality.

The Neural Network unit 104 is configured as an active learning Neural Network (e.g., a Deep Neural Network) that receives a data sample point as input and is trained to output a predicted label for the input data sample point. In one aspect, Neural Network unit 104 is implemented as a Deep Neural Network which includes a plurality of layers of one or more nodes forming a directed graph including one or more hidden layers. In accordance with this aspect, Neural Network 104 includes an input layer of one or more nodes, an output layer of one or more nodes, and one or more hidden layers of nodes interconnected between the input layer and the output layer. More generally, each layer (whether an input layer, output layer, or an optional hidden layer) of the Neural Network 104 includes one or more nodes or processing elements which are interconnected with other nodes in an adjacent layer of the Neural Network 104. The connections between nodes are associated with weights that define the strength of association between the nodes. Each node is associated with a linear, or more typically, a non-linear activation function, which defines the output of the node given one or more inputs. As will be understood by one of ordinary skill in the art, training the Neural Network 104 includes adjusting the weights that define the strength of the interconnections of the nodes in adjacent layers of the Neural Network 104 based on a given input and an expected output.

The training data set 108 is a set of data points that are labeled correctly and used by the trainer unit 102 to initially (and iteratively) train the Neural Network 104 to predict labels for the test data set 110. The test data set 110 is a set of unlabeled data points that are used by the tester unit 106 as input to the Neural Network 104 to test the prediction of the Neural Network unit 104 after it is trained using the training data set 108.

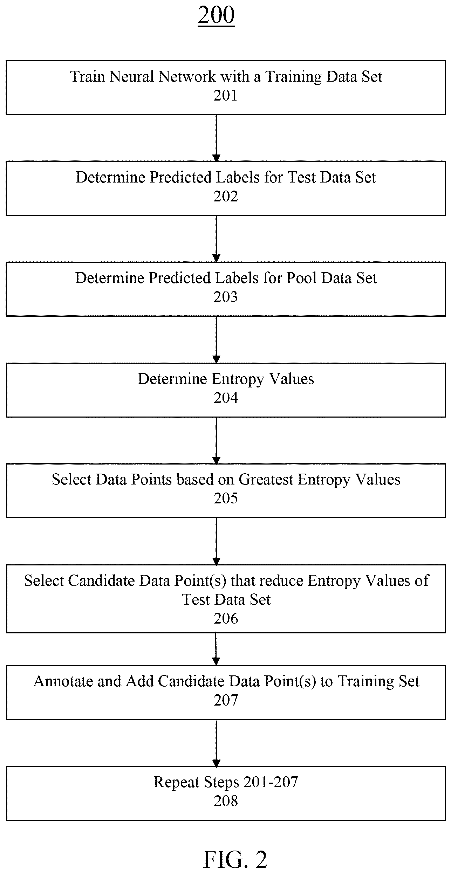

In addition to the foregoing, system 100 as illustrated also includes a set of pool data 112, a query unit 114, and an annotation unit 116. The pool set 112 is a data set that includes additional unlabeled data samples points that are not included in the test set 108. However this is not a limitation, and some embodiments may include data points that are common to the pool data set and the test data set. The query unit 114 is configured to determine a subset of candidate unlabeled data points from the pool set and, to dynamically select and add one or more data points from the subset of the candidate data points, along with their correct labels, to the training data set 108 as described with reference to FIG. 2 below. The annotation unit 116 is configured to receive as input an unlabeled data point (e.g., a candidate data point selected from the pool set 112 by the query unit 114), and to provide as output the correct label for the input data point. In various embodiments, as described below, particular unlabeled data sample points from the pool data set 112 are dynamically selected, labeled, and then added by the query unit 114 to augment the training data set 108, which is used to iteratively train the Neural Network 104.

In a representative embodiment, the training data 108, test data 110, and pool data 112 include image data and the Neural Network 104 is trained to classify or label one or more objects detected in the image data based on one or more features extracted from the image data.

FIG. 2 illustrates an example process 200 in conjunction with system 100 of FIG. 1 in accordance with various aspects of the disclosure.

In step 201, the trainer unit 102 generates and trains the Neural Network unit 104 to predict labels using an initial or augmented set of correctly labeled training data points 108. This step, when performed for the very first time, may also be understood as the initial step in which the trainer unit 102, in a first iteration, uses the initial set of correctly labeled data points, i.e., the training data set 108, as input into an untrained Neural Network 104. Neural Network unit 104 receives the training data points (i.e., a set of unlabeled points Xi along with its respective set of correct labels Yi) trains to output or predict a set of labels (∼Yi) that match the correct labels for the training data points in the training data set 108.

In step 202, the tester unit 106 inputs the unlabeled data points from the set of test data 110 into the trained Neural Network 104 and receives, from the trained Neural Network 104, the predicted labels for the test data set 110.

In step 203 the query unit 114 inputs the unlabeled data points from the set of pool data 112 into the trained Neural Network 104, and receives, from the trained Neural Network 104, the predicted labels for the pool data set 112.

In step 204, the query unit 114 computes label entropy values for the data points in the pool set 112 based on the predicted labels received from the Neural Network 104 in step 203.

In step 205 the query unit 114 selects a subset of data sample points from the pool set 112 that have the maximal (or relatively greatest) computed label entropy values (i.e., uncertainty). For example, the query unit 114 may identify and select a number A of data sample points from the labeled pool set 112 which have the highest labeling uncertainty (e.g., higher than a predetermined threshold entropy value) relative to other data points in the pool set. The entropy values of predicted labels for the data points in the pool data set may be computed by the query unit 114 using a conventional entropy calculation algorithm, as will be understood by one of ordinary skill in the art. The number of data sample points that are selected in subset A may be based on a predetermined entropy threshold.

In step 206, the query unit 114 dynamically selects, from the data points in subset A determined in step 205, one or more candidate data points, which when included in the training data set along with its predicted label, most reduces or minimizes the computed entropy value of the labels predicted by the Neural Network 104 for the test data set 110. Thus, for every data point in set subset A, the data point is applied to the Neural Network unit and the entropy value of test set 110 is computed based on the labels predicted by the neural network unit for the data points in subset A. The data point(s) in A that most reduces the entropy of the test set 110 is identified as a candidate data point for addition to the training data set 108. The number candidate data points that are selected may be based on a predetermined training label budget.

In step 206, the query unit 114 inputs the dynamically selected candidate data point into the annotation unit 116 and receives its true or correct label from the annotation unit.

In step 207, the trainer unit 102 augments the training data set 108 by adding the candidate data point and its true label into training data set 108. The number of data points and their true labels that are added to the training data set 108 may be based on a desired or predetermined labeling budget associated with the training data set.

In step 208, steps 201-207 are reiterated to retrain the Neural Network unit 104 using the updated or augmented training data set 108 a predetermined number of times until the Neural Network 104 satisfies a desired accuracy or error constraints for predicting labels of the test data set 110.

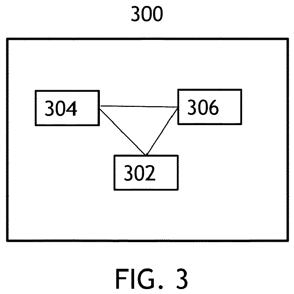

FIG. 3 depicts a high-level block diagram of a computing apparatus 300 suitable for implementing various aspects of the disclosure (e.g., one or more units or components of system 100 of FIG. 1 and/or one or more steps depicted in process 200 of FIG. 2). Although illustrated in a single block, in other embodiments the apparatus 300 may also be implemented using parallel and distributed architectures. Thus, for example, various steps such as those illustrated in the example of process 200 may be executed using apparatus 300 sequentially, in parallel, or in a different order based on particular implementations. Furthermore, each of the units illustrated in FIG.1, may be implemented in a single apparatus 300 having a single processor, a single apparatus 300 having multiple processors dedicated to each unit, or a different apparatus 300 for each of the units that are communicatively interconnected to each other via, for example, a network. Apparatus 300 includes a processor 302 (e.g., a central processing unit ("CPU")), that is communicatively interconnected with various input/output devices 304 and a memory 306.

The processor 302 may be any type of processor such as a general purpose central processing unit ("CPU") or a dedicated microprocessor such as an embedded microcontroller or a digital signal processor ("DSP"). The input/output devices 304 may be any peripheral device operating under the control of the processor 302 and configured to input data into or output data from the apparatus 300, such as, for example, network adapters, data ports, and various user interface devices such as a keyboard, a keypad, a mouse, or a display.

Memory 306 may be any type of memory suitable for storing electronic information, such as, for example, transitory random access memory (RAM) or non-transitory memory such as read only memory (ROM), hard disk drive memory, compact disk drive memory, optical memory, etc. The memory 306 may include data and instructions stored in a non-transitory memory which, upon execution by the processor 302, may configure or cause the apparatus 300 to implement the units shown in FIG. 1 or execute the functionality or aspects described hereinabove (e.g., one or more steps of process 300). In addition, apparatus 300 may also include other components typically found in computing systems, such as an operating system, queue managers, device drivers, or one or more network protocols that are stored in memory 306 and executed by the processor 302 to communicate with other apparatus 300 or processing devices.

While a particular embodiment of apparatus 300 is illustrated in FIG. 3, various aspects of in accordance with the present disclosure may also be implemented using one or more application specific integrated circuits (ASICs), field programmable gate arrays (FPGAs), or any other combination of circuitry or hardware. For example, the data disclosed herein may be stored in various types of data structures which may be accessed and manipulated by a programmable processor (e.g., CPU or FPGA) that is implemented using software, hardware, or combination thereof.

Although not limited to the following embodiment, the system and method of training a Neural Network as described above are particularly advantageous for object/feature detection in video and imaging data. In these applications in particular, the labeling of training samples for training a learning model can be a costly and lengthy process. In this regard, FIG. 4 illustrates an example comparison between training a Neural Network with random selection (baseline) and the Neural Network 104 trained as described by the process illustrated in FIG. 2 using the benchmark MNIST data set. As seen in FIG. 4, the system and method disclosed herein demonstrate about a 10% improvement in training accuracy when the Neural Network 104 reaches a level of 95% accuracy. The system and method disclosed herein are suited as an alternative for traditional methodology for semi-supervised learning for Deep Neural Networks.

For training a Deep Neural Network the method disclosed herein can be implemented on a set of the different layers in the Deep Network, as will be appreciated by those of ordinary skill in the art, with an overall goal to select the most uncertain points and minimize the entropy of the test output over all selected layers.

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure.

## Claims

1. A system for training a neural network, the system comprising:
a trainer unit configured to iteratively train an active learning neural network unit using a set of correctly labeled training data points;
a tester unit configured to use the trained neural network unit to assign labels to a test set of unlabeled data points;
an annotation unit configured to receive a selected candidate unlabeled data point as input and provide its correct label as output within a predetermined margin of error;
a query unit configured to:
receive as input a pool set of unlabeled data points, the set of correctly labeled training data points, and the test set of unlabeled data points; and:
iteratively select a candidate data point to label using the annotation unit from the pool set of unlabeled data points, wherein the query unit is further configured to:
compute label entropy values for each of the pool set of unlabeled points and select a subset of potential data points from the pool set that have the highest entropy values;
select the candidate data point from the potential data points as the data point whose addition to the labeled training set most reduces the label entropy of the test set compared to the label entropy of the test set without addition of the data into the training set; and,
provide as input the selected candidate data point as input to the annotation unit, receive its correct label from the annotation unit, and augment the set of training points with the selected candidate data point and its correct label.

2. The system of claim 1, wherein the neural network unit is a deep neural network unit having at least one hidden layer.

3. The system of claim 1, wherein the set of correctly labelled training data points comprises a set of correctly labeled training image data and the test set and pool set of unlabeled data points respectively comprise a set of unlabeled image data and, the neural network unit is configured to output predicted labels for image data received as input to the neural network unit.

4. A computer-implemented method for training a neural network, the method comprising:
receiving as input a pool set of unlabeled data points, a training set of correctly labeled training data points, and a test set of unlabeled data points;
training an active learning neural network unit using the set of correctly labeled training data points;
iteratively selecting a candidate data point to label using an annotation unit from the pool set of unlabeled data points, wherein selecting the candidate data point to label further comprises;
computing label entropy values for each of the pool set of unlabeled points and selecting a subset of potential data points from the pool set that have the highest entropy values;
selecting the candidate data point from the potential data points as the data point whose addition to the training set most reduces the label entropy of the test set compared to the label entropy of the test set without addition of the data into the training set; and,
providing as input the selected candidate data point as input to an annotation unit, receiving its correct label from the annotation unit, and augmenting the training set of correctly labeled training data points with the selected candidate data point and its correct label; and,
retraining the active learning neural network unit using the augmented set of correctly labeled training data points.

5. The method of claim 4, wherein the active learning neural network unit is a deep neural network unit having at least one hidden layer.

6. The method of claim 4, wherein the set of correctly labelled training data points comprises a set of correctly labeled training image data and the test set and pool set of unlabeled data points respectively comprise a set of unlabeled image data and, the neural network unit is configured to output predicted labels for image data received as input to the neural network unit.

7. An apparatus for training a neural network, the apparatus comprising:
a trainer unit configured to iteratively train an active learning neural network unit using a set of correctly labeled training data points;
a tester unit configured to use the trained neural network unit to assign labels to a test set of unlabeled data points;
an annotation unit configured to receive a selected candidate unlabeled data point as input and provide its correct label as output within a predetermined margin of error;
a query unit configured to:
receive as input a pool set of unlabeled data points, the set of correctly labeled training data points, and the test set of unlabeled data points; and:
iteratively select a candidate data point to label using the annotation unit from the pool set of unlabeled data points, wherein the query unit is further configured to:
compute label entropy values for each of the pool set of unlabeled points and select a subset of potential data points from the pool set that have the highest entropy values;
select the candidate data point from the potential data points as the data point whose addition to the labeled training set most reduces the label entropy of the test set compared to the label entropy of the test set without addition of the data into the training set; and,
provide as input the selected candidate data point as input to the annotation unit, receive its correct label from the annotation unit, and augment the set of training points with the selected candidate data point and its correct label.

8. The apparatus of claim 7, wherein the neural network unit is a deep neural network unit having at least one hidden layer.

9. The apparatus of claim 7, wherein the set of correctly labelled training data points comprises a set of correctly labeled training image data and the test set and pool set of unlabeled data points respectively comprise a set of unlabeled image data and, the neural network unit is configured to output predicted labels for image data received as input to the neural network unit.
